# EUROPÄISCHE PATENTSCHRIFT

(11) **EP 2 874 832 B1**
(45) Veröffentlichungstag und Bekanntmachung des Hinweises auf die Patenterteilung: **31.10.2018**
(21) Anmeldenummer: 13729297.5
(22) Anmeldetag: 06.06.2013
(51) Int. Cl.: B60G 21/05

(54) **ANGETRIEBENE ACHSE EINES ZWEISPURIGEN FAHRZEUGS**
DRIVEN AXLE OF A DUAL-TRACK VEHICLE
ESSIEU ENTRAÎNÉ D'UN VÉHICULE À QUATRE ROUES

(30) Priorität: 17.07.2012 DE 102012212475
(43) Veröffentlichungstag der Anmeldung: 27.05.2015
(73) Patentinhaber: Bayerische Motoren Werke Aktiengesellschaft, 80809 München (DE)
(72) Erfinder: GERBIG, Falk, 85391 Allershausen (DE); MUSCHLER, Thomas, 85051 Ingolstadt (DE)
(86) Internationale Anmeldenummer: PCT/EP2013/061745
(87) Internationale Veröffentlichungsnummer: WO 2014/012704

(56) Entgegenhaltungen:
- DE-A1- 3 214 053
- DE-A1- 10 007 047
- DE-A1-102009 023 434
- DE-C1- 4 021 485
- DE-C2- 2 330 229
- DE-C2- 2 355 588
- FR-A1- 2 150 479
- JP-A- S6 212 406

## Beschreibung

Die Erfindung betrifft eine angetriebene Achse, insbesondere eine Vorderachse, eines zweispurigen Fahrzeugs, nach dem Oberbegriff des Anspruchs 1.

Zum Stand der Technik wird zunächst auf die DE 23 55 588 C2 verwiesen, in der eine Vorderradaufhängung für Kraftfahrzeuge mit einem oberen Dreiecks-Führungslenker und einem unteren Dreiecks-Führungslenker gezeigt ist, bei welcher die unteren rückwärtigen Lenkerarme des linken und des rechten Fahrzeug-Vorderrads elastisch auf einem gemeinsamen sog. Querjoch abgestützt sind, welches seinerseits mit den seitlichen Längsträgern des Fahrzeug-Aufbaus elastisch verbunden ist. Mit dieser bekannten Konstruktion kann das sog. "Stuckern", d.h. die Neigung zu stoßartigen Schwingungen des Fahrzeugs, die durch Fahrbahnunebenheiten angeregt und zumeist durch Eigenschwingungen des Fahrzeug-Antriebsaggregats verstärkt werden, weitgehend unterbunden werden. Im Stand der Technik ist eine solche Achs-Konstruktion, bei der in anderen Worten ausgedrückt ein radführender Lenker des linken Vorderrads mit dem entsprechenden Führungs-Lenker des rechten Vorderrads über ein Querjoch, für welches vorliegend der Begriff "Koppelstange" verwendet wird, verbunden ist, für nicht angetriebene Vorderräder gezeigt.

Als weiterer und zur Bildung des Oberbegriffs des Anspruchs 1 herangezogener Stand der Technik sei die DE 100 07 047 A1 genannt, welche ebenfalls eine Art eines "Querjochs" in Form einer dort sog. Querstange zeigt, die vorliegend als Koppelstange bezeichnet ist. Diese bekannte Querstange oder Koppelstange unterdrückt den Nachspureffekt bei Kurvenfahrt und somit bei einem ungleichen Einfedern der Räder der Fahrzeug-Hinterachse des Fahrzeugs, indem aufgrund einer daraus resultierenden Verschwenkbewegung der Koppelstange um die Fzg.-Längsachse der horizontal gemessene Abstand zwischen den Anlenkpunkten der Koppelstange an den radführenden Lenkern verringert wird und hierdurch die Räder geringfügig in Richtung Vorspur verschwenkt werden. Dieser bekannte Stand der Technik befasst sich (folglich) mit fahrdynamischen Reaktionen aufgrund von an den Rädern des Fahrzeugs wirkenden fahrdynamischen Kräften. Von irgendwelchen Schwingungen, die beispielsweise aus Eigenschwingungen des Fahrzeug-Antriebsaggregats resultieren oder durch diese verstärkt werden, ist in dieser Schrift jedoch keine Rede.

Zurückkommend auf das Stuckern sowie auf aus Eigenschwingungen des Fahrzeug-Antriebsaggregats resultierenden oder durch diese verstärkten Schwingungen wurden im weiteren (zeitlichen) Verlauf der komfortbetonten Entwicklung von Kraftfahrzeugen zur Vermeidung von Stuckern oder dgl. einerseits die Elastizitäten in den Abstützungen (= Lagern) der radführenden Lenker am Fahrzeug-Aufbau bzw. an einem Achsträger und im Falle eines Achsträgers auch die Elastizitäten in den Lagern des Achsträgers am Fahrzeug-Aufbau geeignet angepasst und es wurden zur Vermeidung der Verstärkung solcher Fahrzeug-Schwingungen durch Eigenschwingungen des Fahrzeug-Antriebsaggregats dessen Lagerungen, die sog. Motorlager, geeignet weiter verbessert.

Es hat sich jedoch gezeigt, dass insbesondere bei Einsatz von Hubkolben-Verbrennungsmotoren mit geringer Zylinderzahl als Fzg-Antriebsaggregate an der angetriebenen Fahrzeug-Achse dynamische Längsschwingungen an den Fahrzeug-Rädern entstehen können, die bislang nur durch den Einsatz zusätzlicher Tilgermassen und aufwändiger Abstimmung der relevanten elastischen Aufhängungen gemildert oder unter Verwendung äußerst aufwändiger Motorlager im wesentlichen verhindert werden können.

Hier eine Verbesserung aufzuzeigen ist Aufgabe der vorliegenden Erfindung. Die Lösung dieser Aufgabe ist für eine angetriebene Achse nach dem Oberbegriff des Anspruchs 1 dadurch gekennzeichnet, dass in der Koppelstange und/oder in der Verbindung zwischen der Koppelstange und einem der über diese gegeneinander abgestützten Lenker ein mechanischer Tiefpassfilter vorgesehen ist, welcher die Steifigkeit der Koppelstange in niedrigen Frequenzbereichen, in welchen die Seitenführungskräfte an den Rädern wirksam werden, zumindest annähernd aufhebt, so dass in diesen niedrigeren Frequenzbereichen nahezu keine Kräfte über die Koppelstange übertragen werden, wohingegen in Bereichen höherer Frequenzen, in welchen aus einer Drehungleichförmigkeit eines Fzg.-Antriebsaggregats resultierende Störkräfte auftreten, der Tiefpassfilter sperrt, so dass die Koppelstange dann diese Störkräfte zwischen dem linksseitigen Lenker und rechtsseitigen Lenker überträgt. Vorteilhafte Aus- und Weiterbildungen sind Inhalt der Unteransprüche.

Bekanntlich führen Drehungleichförmigkeiten des Fahrzeug-Antriebsaggregats bzw. aus diesen resultierende insbesondere periodische Schwankungen des vom Antriebsaggregat abgegebenen Drehmoments über die Rad-Antriebswellen zu entsprechenden Schwankungen in der von den Fahrzeug-Rädern auf die Fahrbahn übertragenen Zugkraft. Als Folge werden über die Radaufhängung schwellende Kräfte, sog. Störkräfte mit einer durch die annähernd periodischen Schwankungen bestimmten Frequenz in den Fahrzeug-Aufbau eingeleitet, die auch die Akustik im Fzg.-Innenraum verschlechtern. Nun wurde erkannt, dass sich solche von der Aufhängung des linken und des rechten angetriebenen Fahrzeug-Rads in den Fahrzeug-Aufbau eingeleiteten einander entgegen gerichtete Störkräfte von im wesentlichen gleichen Betrag gegenseitig kompensieren können, d.h. sich gegenseitig zumindest annähernd auslöschen können, wenn ein Paar von einander entsprechenden Lenkern der linken und der rechten Radaufhängung über ein jedenfalls im relevanten Frequenzbereich, in oder mit welchem diese Störkräfte auftreten, im wesentlichen steifes Bauteil miteinander verbunden werden bzw. verbunden sind. Ein solches im wesentlichen steifes Bauteil wird vorliegend als Koppelstange bezeichnet, ohne hierdurch eine Einschränkung auf ein rein "stangenförmiges" Bauteil schaffen zu wollen. Vorzugsweise ist diese Koppelstange nahe des aufbauseitigen Lenkerlagers mit dem jeweiligen Lenker verbunden, welches in Fahrzeug-Längsrichtung betrachtet gegenüber dem zugehörigen Radträger bzw. gegenüber dem Mittelpunkt des von diesem Lenker anteilig geführten Rades versetzt ist. Damit wandeln sich Längsschwingungen des angetriebenen Rades oder Radträgers, die aus Drehungleichförmigkeiten des Antriebsaggregats resultieren, zu Querschwingungen des lagernahen Lenkerbereichs um, die über die erfindungsgemäße Koppelstange nun vom linksseitigen Lenker und vom rechtsseitigen Lenker ausgehend gegeneinander wirken und sich somit gegenseitig aufheben.

Besonders wirkungsvoll ist diese soweit erläuterte Weiterleitung oder Umleitung der Drehungleichförmigkeiten des Antriebsaggregats über Längsschwingungen des Rades oder Radträgers zu Querschwingungen eines aufbauseitigen Lenker-Abschnitts oder Lenkerbereichs im Falle von dem Fachmann bekannten Dreiecks-Querlenkern, die üblicherweise eine einzige Verbindungsstelle mit dem Radträger und zwei Lagerstellen am Fahrzeug-Aufbau oder an einem zwischengeschalteten Achsträger aufweisen.

Bei der vorliegenden Erfindung ist jeder der beiden Lenker, die über die bzw. zumindest eine erfindungsgemäße Koppelstange miteinander verbunden sind, zunächst in geringem Umfang elastisch direkt am Fahrzeug-Aufbau abgestützt, und zwar im jeweiligen Lenker-Lager räumlich, d.h. in Fahrzeug-Längsrichtung und in Fahrzeug-Querrichtung und in Richtung der Fahrzeug-Hochachse mit den erforderlichen Drehfreiheitsgraden für eine Ein- und Ausfederbewegung, d.h. den Radhub des unter anderem über diesen Lenker geführten Rades. Vorzugsweise nahe dieses wie üblich geringfügig elastischen Lenker-Lagers ist am jeweiligen Lenker die bzw. zumindest eine erfindungsgemäße Koppelstange angelenkt, die selbst an keiner weiteren Stelle abgestützt ist. Diese Koppelstange verbindet den jeweiligen Lenker des linken Fahrzeug-Rads mit dem entsprechenden Lenker des rechten Fahrzeug-Rades und verläuft somit zumindest annähernd in Fahrzeug-Querrichtung. Eine Kraftübertragung durch die Koppelstange vom linksseitigen Lenker zum rechtsseitige Lenker und umgekehrt kann somit naturgemäß ebenfalls nur in Fahrzeug-Querrichtung, genauer in Richtung der Koppelstange erfolgen, insbesondere, wenn für die Verbindung zwischen der Koppelstange und dem jeweiligen Lenker ein Kugelgelenk vorgesehen ist. Letzteres sollte vorzugsweise zumindest annähernd spielfrei sein, um im relevanten Frequenzbereich eine im Wesentlichen steife Abstützung der beiden besagten Lenker gegeneinander über die erfindungsgemäße Koppelstange zu ermöglichen. In anderen Worten ausgedrückt ist die erfindungsgemäße Verbindung zwischen der Koppelstange und dem jeweiligen Lenker derart ausgebildet, dass sie praktisch nur in Längsrichtung der Koppelstange orientierte Kräfte vom jeweiligen Lenker in die Koppelstange zu übertragen in der Lage ist, was erfindungsgemäß jedoch nur in einem im Hinblick auf die erfindungsgemäße Funktion relevanten Frequenzbereich in nennenswertem Umfang erfolgen soll.

Was den soeben verwendeten Begriff des relevanten Frequenzbereich für eine im Wesentlichen steife gegenseitige Abstützung der Lenker über die Koppelstange betrifft, so soll diese Steifigkeit im wesentlichen nur bezüglich relativ hochfrequenter Störkräfte wirksam sein, d.h. bezüglich der weiter oben erläuterten Drehungleichförmigkeiten des Antriebsaggregats bzw. der aus diesen resultierenden Schwankungen in den von den angetriebenen Fahrzeug-Rädern auf die Fahrbahn übertragenen Zugkräften, welche naturgemäß eine höhere Frequenz aufweisen, als Schwankungen in den zwischen den Rädern und der Fahrbahn übertragenen Querkräften, d.h. Seitenführungskräften, oder Vertikalkräften wie in der den Oberbegriff des Anspruchs 1 bildenden DE 100 07 047 A1 vorgesehen. Hinsichtlich Schwankungen in den über die Räder in die Radaufhängung bzw. Achse eingeleiteter Seitenführungskräfte oder Vertikalkräfte soll eine erfindungsgemäße Koppelstange vorzugsweise nicht oder zumindest nur geringfügig und somit erheblich weniger wirksam sein, um die ansonsten gewünschte Einzelradaufhängung beizubehalten bzw. eine direkte Einflussnahme der Radaufhängung des linken Rades auf diejenige des rechten Rades (und umgekehrt) zu vermeiden. Letzteres ist erfindungsgemäß dadurch dargestellt, dass in der Koppelstange und/oder in der Verbindung zwischen der Koppelstange und einem der über diese gegeneinander abgestützten Lenker ein "mechanischer" Tiefpassfilter vorgesehen ist. Ein solcher mechanischer Tiefpassfilter hebt die Steifigkeit der Koppelstange (oder dgl.) in niedrigen Frequenzbereichen, in oder mit welchem fahrdynamische Seitenführungskräfte oder Vertikalkräfte an den Rädern wirksam werden, im wesentlichen auf, so dass in diesen niedrigeren Frequenzbereichen nahezu keine Kräfte über die Koppelstange übertragen werden. Niederfrequente Kräfte lässt der erfindungsgemäße Tiefpassfilter somit einfach passieren, ohne dass eine Übertragung dieser Kräfte durch die erfindungsgemäße Koppelstange erfolgt. In Bereichen höherer Frequenzen hingegen, in oder mit welchen die weiter o.g. und aus der Drehungleichförmigkeit des Fzg.-Antriebsaggregats resultierenden Störkräfte auftreten, sperrt der erfindungsgemäße Tiefpassfilter, als Folge dessen die erfindungsgemäße Koppelstange dann die StörKräfte wie gewünscht zwischen dem linksseitigen und rechtsseitigen Lenker überträgt.

Vorzugsweise kann der besagte Tiefpassfilter durch ein hinischtlich der geforderten, soeben ausführlich beschriebenen Eigenschaft geeignet ausgebildetes Elastomerelement dargestellt werden, kann aber alternativ auch durch eine geeignet ausgelegte Feder-Dämpfer-Einheit dargestellt sein bzw. kann eine solche bilden. Es wird somit zur Vermeidung oder zumindest zur Reduzierung einer gegenseitigen Beeinflussung der Elastokinematik des rechten und linken Rades einer mit zumindest einer oben beschriebenen Koppelstange ausgerüsteten Achse das Einfügen eines zusätzlichen Bauteils mit der Wirkung als mechanischer Tiefpassfilter in den Zug-/Druck-Lastpfad der Koppelstange vorgeschlagen. Neben einer Buchse mit einem Elastomerelement mit durch die Werkstoffeigenschaften begründeter frequenzabhängiger Hysterese kann hierfür auch eine geeignete Feder-Dämpfer-Einheit vorgesehen sein.

An einer soweit geschilderten Achse werden die vom Fzg.-Antriebsaggregat in die Achse eingeleiteten Kräfte-Schwingungen von relativ hoher Frequenz, die beim bislang üblichen Stand der Technik (einer Einzelradaufhängung ohne erfindungsgemäße Koppelstange) in den Fahrzeug-Aufbau, d.h. in die Karosserie eingeleitet werden, mit einem erfindungsgemäßen Verbund über die Koppelstange innerhalb dieses Verbundes eines linksseitigen und rechtsseitigen radführenden Lenkers gegenseitig kompensiert. Beispielsweise entspricht diese genannte Frequenz bei einem Dreizylinder-Verbrennungsmotor, als Fzg.-Antriebsaggregat der 1,5-ten Motorordnung. Trotz dieses Verbundes können diese radführenden Lenker analog dem üblichen Stand der Technik (einer Einzelradaufhängung ohne Koppelstange) zur üblichen Entkopplung der sonstigen Schwingungsanteile über elastische Lager direkt oder über einen Achsträger indirekt an den Fzg.-Aufbau, d.h. an die Karosserie angebunden werden. Ein in der Koppelstange integrierter Tiefpassfilter besitzt bei höheren Frequenzen eine größere Steifigkeit und überträgt die störenden höherfrequenten Schwingungen, die vom Verbrennungsmotor stammen, wesentlich ausgeprägter als Kräfte mit niedrigeren Frequenzen und bewirkt damit deren direkte Kompensation. Die vergleichsweise langsamen Kraftänderungen insbesondere aus Seitenführungskräften, die vom Fahrwerk eingeleitet werden und vorteilhaft auf die Elastokinematik der jeweiligen Fahrzeugseite einwirken, werden von der anderen Fahrzeugseite ferngehalten, weil ein als Tiefpassfilter wirkendes Elastomerelement oder eine ebenfalls bereits genannte Feder/Dämpfer-Einheit relativ langsame Relativbewegüngen der beiden Teile einer Koppelstange, in welcher ein solches mechanisches Tiefpassfilter integriert bzw. zwischen welchen Koppelstangen-Teilen ein solches mechanisches Tiefpassfilter eingebaut ist, zulässt.

Die beigefügte und im Folgenden erläuterte Prinzipdarstellung zeigt ein Ausführungsbeispiel der vorliegenden Erfindung mit einer Einzelradaufhängung der angetriebenen Vorderräder eines Personenkraftwagens, wobei nur die untere Lenkerebene dargestellt ist, die als Lenker des linksseitigen und des rechtsseitigen Rades, die über eine erfindungsgemäße Koppelstange miteinander verbunden sind, ansonsten übliche Dreiecks-Querlenker aufweist.

Der linksseitige Radträger der in Aufsicht auf die Fahrbahn gezeigten Achse trägt die Bezugsziffer 1l und der rechtsseitige Radträger die Bezugsziffer 1r. Ein unterer linksseitiger radführender Lenker in Form eines Dreiecks-Querlenkers trägt die Bezugsziffer 2l und der entsprechende rechtsseitige Lenker trägt die Bezugsziffer 2r. Nicht dargestellt sind die wie üblich in Form von geringfügig elastischen Gummilagern ausgebildeten Anbindungsstellen dieser Lenker 2l bzw. 2r an den zugehörigen Radträgern 1l bzw. 1r sowie an einem Achsträger 3 in dessen in Fahrtrichtung F des Fahrzeugs betrachteten vorderen Bereich; letztere liegen jedoch in der Nähe eines Punktes, auf den ein mit dem Buchstaben "v" gekennzeichneter Pfeil gerichtet ist und somit nahe einer die Dreh-Mittelpunkte der beiden Radträger 1l, 1r verbindenden und in Fzg.-Querrichtung verlaufenden Linie.

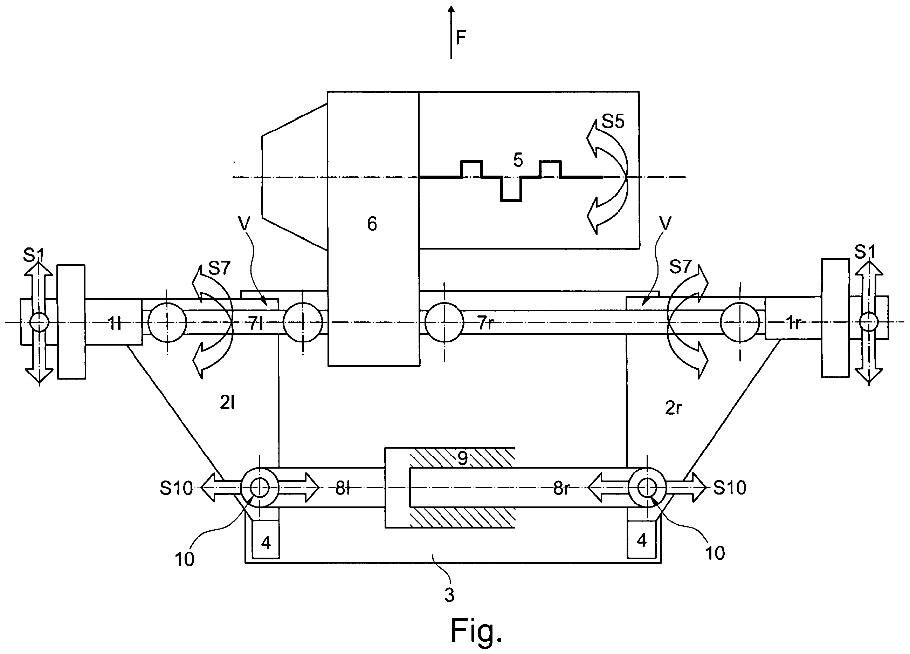

Symbolisch dargestellt ist (jedoch) jeweils ein Lenkerlager 4, über das der hintere Endbereich des jeweiligen Dreiecks-Lenkers 2l bzw. 2r räumlich, d.h. in den drei Dimensionen (Fzg.-Längsrichtung, Fzg.-Querrichtung und Hochachse des Fahrzeugs) in geringem Umfang elastisch (nämlich über ein übliches Gummilager) solchermaßen am Vorderachsträger 3 abgestützt ist, dass der Lenker 2l bzw. 2r die im Rahmen einer Hubbewegung des Rades bzw. Radträgers 1l bzw. 1r erfolgende Verschwenkbewegung ausführen kann. Dabei ist dieses hintere aufbauseitige Lenklager 4 in Fahrtrichtung F betrachtet gegenüber dem jeweiligen Radträger 1l bzw. 1r versetzt, d.h. es liegt hinter dem durch den Pfeil "v" gekennzeichneten vorderen Lenker-Lager am Achsträger 3. Bei Blick in Fahrzeug-Querrichtung sind dabei der jeweilige Radträger 1l bzw. 1r und das Lenkerlager 4 in Horizontalrichtung betrachtet soweit voneinander beabstandet, dass auch ein später noch erläuterter auf dem Lenker 2l bzw. 2r liegender Gelenkpunkt 10 vom Radträger 1l bzw. 1r und genauer vom in der Figur nicht sichtbaren Anlenkpunkt des Lenkers 2l bzw. 2r am Radträger 1l bzw. 1r beabstandet ist.

Mit der Bezugsziffer 5 ist die Kurbelwelle des ansonsten nicht weiter dargestellten und beispielsweise als dreizylindriger Hubkolben-Verbrennungsmotor ausgebildeten Fahrzeug-Antriebsaggregats gekennzeichnet. An diese Kurbelwelle 5 schließt sich funktional ein Getriebe 6 mit einem Differential an, von dem Abtriebswellen 7l bzw. 7r zum linken bzw. rechten Radträger 1l bzw. 1r bzw. genauer zu einer in diesem angeordneten Antriebsnabe für das jeweilige nicht dargestellte Rad führen.

Ein wesentliches Element der vorliegenden Achse und der vorliegenden Erfindung ist eine sich in Fzg.-Querrichtung erstreckende Koppelstange 8, welche vorliegend mit einem integriertem mechanischem Tiefpassfilter 9 in Form einer lediglich symbolisch dargestellten Buchse mit einem Elastomerelement, welches auch als Feder-Dämpfer-Einheit bezeichnet werden kann bzw. als solche wirkt, ausgerüstet ist. Hierfür ist die Koppelstange 8 geteilt ausgeführt mit einer linksseitigen und dem linksseitigen Lenker 1l zugeordneten Koppelstangen-Hälfte 8l und einer rechtsseitigen und dem rechtsseitigen Lenker 1r zugeordneten Koppelstangen-Hälfte 8r, zwischen denen das genannte mechanische Tiefpassfilter 9 (vgl. die Erläuterung hierzu vor der Figurenbeschreibung) zwischengeschaltet ist. Die linksseitige Koppelstangenhälfte 8l ist in einem zumindest annähernd spielfreien Gelenkpunkt 10 mit dem linksseitigen Lenker 2l verbunden und es ist die rechtsseitige Koppelstangenhälfte 8r in einem zumindest annähernd spielfreien Gelenkpunkt 10 mit dem rechtsseitigen Lenker 2r verbunden. Diese Gelenkpunkte 10 sind vorzugsweise in Form von Kugelgelenken ausgebildet und nahe des hinteren aufbauseitigen Lenkerlagers 4 vorgesehen. Dies ermöglicht die durch Pfeile dargestellte und im folgenden kurz erläuterte Schwingungs-Kompensation:
Mit dem Doppelpfeil S5 sind Rotationsschwingungen der Kurbelwelle 5 dargestellt, die über die Abtriebswellen 7l, 7r gemäß Pfeil S7 auf die an den Radträgern 1l, 1r gelagerten Räder übertragen werden. Daraus entstehen Längsschwingungen gemäß Doppelpfeil S1 des jeweiligen Radträgers 1l, 1r, die über die jeweiligen Lenker 2l, 2r weitergeleitet werden. Diese gelangen erfindungsgemäß jedoch nicht in die Lenkerlager 4, sondern es löschen sich die in den Lenkern 1l, 1r weitergeleiteten Längsschwingungen S1 des linken Radträgers 1l und des rechten Radträgers 1r über die Koppelstange 8 in Form von aus den Lenkern 2l, 2r über die Gelenkpunkte 10 in die Koppelstange 8 eingeleitete Querschwingungen gemäß Doppelpfeil S10 zumindest annähernd gegenseitig aus.

## Patentansprüche

1. Angetriebene Achse eines zweispurigen Fahrzeugs, bei der ein radführender Lenker (2l, 2r) am Fahrzeug-Aufbau oder an einem mit dem Fahrzeug-Aufbau verbundenen Achsträger (3) über ein aüfbauseitiges Lenkerlager (4) in geringem Umfang elastisch räumlich abgestützt ist und wobei der Lenker (2r) des rechtsseitigen Rades mit dem Lenker (2l) des linksseitigen Rades zusätzlich über eine Koppelstange (8) verbunden ist, welche ausschließlich am besagten linksseitigen und rechtsseitigen Lenker (2l, 2r), vorzugsweise nahe des jeweiligen aufbauseitigen und gegenüber dem zugehörigen Radträger (1l, 1r) in Fahrzeug-Längsrichtung versetzt angeordneten Lenkerlagers (4), abgestützt ist
**dadurch gekennzeichnet, dass** in der Koppelstange (8) und/oder in der Verbindung zwischen der Koppelstange (8) und einem der über diese gegeneinander abgestützten Lenker (1l, 1r) ein mechanischer Tiefpassfilter (9) vorgesehen ist, welcher die Steifigkeit der Koppelstange (8) in niedrigen Frequenzbereichen, in welchen die Seitenführungskräfte an den Rädern wirksam werden, zumindest annähernd aufhebt, so dass in diesen niedrigeren Frequenzbereichen nahezu keine Kräfte über die Koppelstange übertragen werden, wohingegen in Bereichen höherer Frequenzen, in welchen aus einer Drehungleichförmigkeit eines Fzg.-Antriebsaggregats resultierende Störkräfte auftreten, der Tiefpassfilter (9) sperrt, so dass die Koppelstange (8) dann diese Störkräfte zwischen dem linksseitigen Lenker (2l) und rechtsseitigen Lenker (2r) überträgt.

2. Achse nach Anspruch 1, wobei der mechanische Tiefpassfilter (9) durch ein Elastomerelement gebildet ist.

3. Achse nach Anspruch 1 oder 2, **dadurch gekennzeichnet, dass** für die Verbindung zwischen der Koppelstange (8) und dem jeweiligen Lenker (2l, 2r) ein zumindest annähernd spielfreies Kugelgelenk vorgesehen ist.

4. Achse nach einem der vorangegangenen Ansprüche, wobei der besagte Lenker (2l, 2r) des linksseitigen und des rechtsseitigen Rades ein unterer Dreiecks-Querlenker ist, nahe dessen hinteren Lenker-Lagers (4) die Verbindung mit der Koppelstange (8) vorgesehen ist.

## Claims

1. A driven axle of a two-track vehicle, in which a wheel-guiding link (2l, 2r) on the vehicle body or on an axle carrier (3) connected to the vehicle body is spatially supported elastically to a small extent via a body-side link bearing (4), and wherein the link (2r) of the right-side wheel is connected to the link (2l) of the left-side wheel additionally via a coupling rod (8), which is supported exclusively on said left-side and right-side links (2l, 2r), preferably in the vicinity of the corresponding body-side link bearing (4) and offset in the vehicle longitudinal direction in relation to the associated wheel carrier (1l, 1r),
**characterised in that** a mechanical low pass filter (9) is provided in the coupling rod (8) and/or in the connection between the coupling rod (8) and one of the links (1l, 1r) mutually supported thereby, which low pass filter at least approximately cancels the rigidity of the coupling rod (8) in low-frequency ranges in which the cornering forces act on the wheels, such that virtually no forces are transmitted via the coupling rod in these low-frequency ranges, whereas in higher-frequency ranges in which disturbance forces resulting from a cyclic irregularity of the vehicle drive system occur, the low-pass filter (9) blocks, such that the coupling rod (8) then transmits these disturbance forces between the left-side link (2l) and right-side link (2r).

2. An axle according to claim 1, wherein the mechanical low pass filter (9) is formed by an elastomer element.

3. An axle according to claim 1 or 2, **characterised in that** an at least approximately play-free ball-and-socket joint is provided for the connection between the coupling rod (8) and the respective links (2l, 2r).

4. An axle according to any one of the preceding claims, wherein said links (2l, 2r) of the left-side and right-side wheels are each a lower triangular transverse control arm, wherein in the vicinity of the rear link bearing (4) thereof there is provided the connection to the coupling rod (8).

## Revendications

1. Essieu entraîné d'un véhicule à deux voies selon lequel un bras de guidage de roue (2l, 2r) s'appuie élastiquement avec une faible amplitude à la carrosserie du véhicule ou à un support d'essieu (3) relié à la carrosserie du véhicule par un palier de bras (4), côté carrosserie, et
le bras (2r) de la roue, côté droit, est relié au bras (21) de la roue, côté gauche, en plus par une barre de couplage (8) qui est appuyée exclusivement à ce bras gauche et ce bras droit (2l, 2r), de préférence à proximité du palier de bras (4), côté carrosserie, et décalé par rapport au support de roue (1l, 1r) correspondant dans la direction longitudinale du véhicule,
**caractérisé en ce que**
la barre de couplage (8) et/ou la liaison entre la barre de couplage (8) et l'un des bras (1l, 1r) appuyé l'un contre l'autre, a un filtre passe-bas (9), mécanique, ce filtre étant actif lorsque la rigidité de la barre de couplage (8) dans la plage des basses fréquences dans lesquelles les efforts de guidage latéral agissent sur les roues, seront au moins sensiblement neutralisés de façon que dans ces plages de basses fréquences, pratiquement aucune force ne soit transmise par la barre de couplage alors que dans les plages des fréquences plus élevées dans lesquelles pour compenser l'uniformité de la rotation du module d'entraînement du véhicule, on a des forces parasites, le filtre passe-bas (9) est bloqué pour qu'ainsi la barre de couplage (8) transmette ces forces parasites entre le bras côté gauche (21) et le bras côté droit (2r).

2. Essieu selon la revendication 1,
**caractérisé en ce que**
le filtre passe-bas (9) mécanique est un élément en élastomère.

3. Essieu selon la revendication 1 ou 2,
**caractérisé en ce qu'**
au moins une articulation à rotule pratiquement sans jeu est prévue dans la liaison entre la barre de couplage (8) et le bras respectif (2l, 2r).

4. Essieu selon l'une des revendications précédentes dans lequel ledit bras (2l, 2r) de la roue, côté gauche et de la roue, côté droit, est un bras transversal en triangle, et la liaison avec la barre de couplage (8) est prévue dans la proximité de son palier de bras arrière (4).
